# EUROPÄISCHE PATENTSCHRIFT

(11) **EP 3 857 672 B1**
(45) Veröffentlichungstag und Bekanntmachung des Hinweises auf die Patenterteilung: **19.02.2025**
(21) Anmeldenummer: 19783447.6
(22) Anmeldetag: 24.09.2019
(51) Int. Cl.: H02J 7/00, H01M 14/00

(54) **ENERGIESPEICHEREINRICHTUNG ZUR SPEICHERUNG VON ELEKTRISCHER ENERGIE MIT MINDESTENS EINEM SPEICHERELEMENT AUF DER BASIS EINES ELEKTROPLAX**
ENERGY STORAGE DEVICE FOR STORING ELECTRICAL ENERGY HAVING AT LEAST ONE STORAGE ELEMENT ON THE BASIS OF AN ELECTROPLAX
DISPOSITIF DE STOCKAGE D'ÉNERGIE DESTINÉ AU STOCKAGE D'ÉNERGIE ÉLECTRIQUE, COMPORTANT AU MOINS UN ÉLÉMENT DE STOCKAGE À BASE D'UN ORGANE ÉLECTRIQUE

(30) Priorität: 25.09.2018 DE 102018123610
(43) Veröffentlichungstag der Anmeldung: 04.08.2021
(73) Patentinhaber: Schleef, Jochen, 49328 Melle (DE)
(72) Erfinder: Schleef, Jochen, 49328 Melle (DE)
(74) Vertreter: Jabbusch, Matthias
(86) Internationale Anmeldenummer: PCT/EP2019/075733
(87) Internationale Veröffentlichungsnummer: WO 2020/064746

(56) Entgegenhaltungen:
- US-A1- 2014 104 751
- US-A1- 2016 145 669
- TANAKA YO ET AL: "An electric generator using living Torpedo electric organs controlled by fluid pressure-based alternative nervous systems", SCIENTIFIC REPORTS, 1 September 2016 (2016-09-01), XP055898703, Retrieved from the Internet <URL:https://www.nature.com/articles/srep25899.pdf> [retrieved on 20240722], DOI: 10.1038/srep25899
- N.A.: "Electric organ (biology)", WIKIPEDIA, 28 July 2018 (2018-07-28), Internet, XP055637615, Retrieved from the Internet <URL:https://en.wikipedia.org/w/index.php?title=Electric_organ_(biology)&oldid=852399416> [retrieved on 20191030]
- OTTO SCHLAPPAL ET AL: "Elektrische Fische: Signalerzeugung & Rezeption", 31 December 2008 (2008-12-31), TU Darmstadt, pages 1 - 21, XP055637715, Retrieved from the Internet <URL:https://docplayer.org/18430663-Elektrische-fische-signalerzeugung-rezeption.html> [retrieved on 20191030]
- ALEXANDER MAURO: "The Role of the Voltaic Pile in the Galvani-Volta Controversy Concerning Animal vs . Metallic Electricity", JOURNAL OF THE HISTORY OF MEDICINE AND ALLIED SCIENCES, vol. XXIV, no. 2, 1 January 1969 (1969-01-01), pages 140 - 150, XP055637442, ISSN: 0022-5045, DOI: 10.1093/jhmas/XXIV.2.140
- HAO SUN ET AL: "Electrochemical Capacitors with High Output Voltages that Mimic Electric Eels", ADVANCED MATERIALS, vol. 28, no. 10, 14 January 2016 (2016-01-14), DE, pages 2070 - 2076, XP055637521, ISSN: 0935-9648, DOI: 10.1002/adma.201505742

## Beschreibung

Die Erfindung betrifft eine Energiespeichereinrichtung zur Speicherung von elektrischer Energie mit mindestens einem Speicherelement, wobei es sich bei mindestens einem Speicherelement um mindestens ein Elektroplax oder um mindestens eine Elektroplaxfaser handelt.

In der die Speichereinrichtungen zur Speicherung von elektrischer Energie kommen in sehr vielen Anwendungsgebieten, beispielsweise zur Zwischenspeicherung von nur temporär verfügbaren regenerativen Energien, zur Energieversorgung von mobilen Anwendungen, in der Elektromobilität oder Ähnlichem, zum Einsatz. Bei den bekannten Energiespeichereinrichtungen kann es sich beispielsweise um Akkumulatoren, Batterien oder Ähnliches handeln. Bei Akkumulatoren wird beispielsweise beim elektrischen Laden elektrische Energie in chemische Energie umgewandelt. Zum Betrieb eines Verbrauchers, also beim Entladen wird im Gegenzug gespeicherte chemische Energie in elektrische Energie umgesetzt. Zur Herstellung eines Akkumulators werden verschiedene Materialien oder Materialkombinationen, wie beispielsweise Blei, Lithium-Ionen, Nickel-Metallhydrid oder ähnliche eingesetzt, wobei das verwendete Material oder die Materialkombination maßgebend für die Nennspannung des Akkumulators sein kann.

Bei den zur Akkumulatorherstellung benötigten Materialien handelt es sich zumeist um nur zu einem geringen Anteil in der Erdkruste vorkommende und somit kostenintensiv und unter hoher Umweltbelastung zu fördernde Substanzen, wie beispielsweise Lithium. Insbesondere kann es durch die geringe Verfügbarkeit und einen steigenden Bedarf an diesen Materialien zu sehr hohen Preisen auf dem Weltmarkt kommen. Weiterhin kann es sich auch um toxische Materialien oder schwer zu recycelnde, bzw. zu entsorgende Komponenten wie Blei oder Cadmium handeln.

Aus dem Wikipedia Artikel vom 28. Juli 2018 "Electric organ (biology)", 28. Juli 2018 (2018-07-28), XP055637615, Internet, Gefunden im Internet: URL: https: //en.wikipedia.org/w/index.php?title=Electric_organ_(biology)&oldid=85239941 6 [gefunden am 2019-10-30] sind elektrische Organe einiger Fischsorten beschrieben, die von den Fischen dazu eingesetzt werden, elektrische Felder zu erzeugen. Es handelt sich hierbei um Neven- oder Muskelgewebe. Die elektrischen Entladungen dieses Organs werden zur Kommunikation, zur Navigation oder auch zur Verteidigung eingesetzt.

In dem Artikel "Elektrische Fische: Signalerzeugung & Rezeption" von Otto Schlappal et al, 31. Dezember 2008 (2008-12-31), Seite 1-21, XP055637715, TU Darmstadt, (Gefunden im Internet: URL:https://docplayer.org/18430663-Elektrische-fische-signalerzeugung-rezeption.html [gefunden am 2019-10-30]) ist angegeben, dass elektrische Fische in der Lage sind durch speziell ausgebildete Organe, sogenannte Elektroplaxe, elektrische Ladungen zu erzeugen. Diese können beachtliche Spannungen und Stromstärken erzeugen und somit zur Verteidigung oder der Jagd eingesetzt werden. Die Gesamtleistung der Elektroplaxe wird durch ihren Aufbau bestimmt. Durch eine serielle Anordnung summieren sich die Potenziale der einzelnen Elektrozyten, während eine parallele Schaltung den resultierenden Strom erhöhen, also die Stromstärke bestimmen. Die Zusammenschaltung der einzelnen Elektrozyten wird als Elektroplax bezeichnet und besteht meist aus seriell übereinander gestapelten Elektrozyten, von denen mehrere parallel geschaltet sind.

Weiterhin wird auf folgende Druckschriften verwiesen:
ALEXANDER MAURO: "The Role of the Voltaic Pile in the Galvani-Volta Controversy Concerning Animal vs. Metallic Electricity", JOURNAL OF THE HISTORY OF MEDICINE AND ALLIED SCIENCES, Band XXIV, Nr. 2, 1. Januar 1969 (1969-01-01), Seite 140-150, XP055637442, ISSN:0022-5045, DOI: 10.1093/jhmas/XXIV.2.140 und
HAO SUN ET AL: "Electrochemical Capacitors with High Output Voltages that Mimic Electric Eels", ADVANCED MATERIALS, Band 28, Nr. 10, 14. Januar 2016 (2016-01-14), Seite 2070-2076, XP055637521, DE ISSN:0935-9648, DOI: 10.1002/adma.201505742.

Des Weiteren wird auf die US 2016/145669 A1 und die US 2014/104751 A1 verwiesen.

Letztlich offenbart der Artikel von Tanaka et.al. "An electric generator using living Torpedo electric organs controlled by fluid pressure-based alternative nervous systems" Scientific Reports, Bd. 6, Nr. 1, 1. September 2016 (2016-09-01),DOI: 10.1038/srep25899 die Verwendung von Elektroplaxen als technischer Energiespeicher.

Der Erfindung liegt die Aufgabe zu Grunde eine Speichereinrichtung zur Speicherung von elektrischer Energie vorzuschlagen, bei der auf die Verwendung von toxischen und aufwendig fördernden Materialien verzichtet werden kann.

Die Lösung dieser Aufgabe erfolgt mit einer Energiespeichereinrichtung mit den Merkmalen des Patentanspruchs 1. Weiterbildungen und vorteilhafte Ausgestaltungen sind in den Unteransprüchen angegeben.

Die Erfindung betrifft eine Energiespeichereinrichtung zur Speicherung von elektrischer Energie mit mindestens einem Speicherelement, wobei es sich bei mindestens einem Speicherelement um mindestens ein Elektroplax oder um eine Elektroplaxfaser handelt, bei der erfindungswesentlich vorgesehen ist, dass die Energiespeichereinrichtung mindestens einen Behälter aufweist, dass in dem Behälter ein elektrisch nichtleitendes Fluid aufgenommen ist, dass die Elektroplaxe und/oder die Elektroplaxfasern zumindest abschnittsweise in dem Behälter angeordnet sind, dass die Elektroplaxe und/oder die Elektroplaxfasern zumindest abschnittsweise, insbesondere vollständig, von dem Fluid umgeben sind, dass das Fluid konservierende Eigenschaften aufweist, dass das Fluid zumindest teilweise aus einem Alkohol, insbesondere aus Ethanol, besteht, dass die Elektroplaxe oder die Elektroplaxfasern künstlich durch Züchtung aus Zellkulturen hergestellt sind, dass der Behälter aus einem nicht elektrisch leitfähigem Material hergestellt ist, und dass der Behälter mindestens zwei Kontaktbereiche an seiner Außenwandung aufweist, wobei jeder Kontaktbereich elektrisch leitend mit einem der elektrischen Pole mindestens eines Elektroplax und/oder einer Elektroplaxfaser verbunden ist.

Die Energiespeichereinrichtung kann mindestens ein Speicherelement, vorzugsweise mehrere Speicherelemente aufweisen. Bei den Speicherelementen handelt es sich um Elektroplaxe. Ein Elektroplax kommt in der Natur beispielsweise bei Zitteraalen oder Zitterrochen vor. Hier können Spannungen von 860 V bei 1A Stromstärke erreicht werden. Ein Elektroplax weist Muskelfasern also Elektroplaxfasern auf, wobei das Muskelgewebe nicht zur Kontraktion, sondern zur Generierung, Speicherung und Abgabe hoher Stromspannungen vorgesehen ist. Die elektrische Energie wird hierbei in den Faserwandungen des Elektroplax gespeichert. Zur Erhöhung der Speicherkapazität, weist die Wandung einer Elektroplaxfaser einseitig eine warzenförmige, also papillöse Struktur auf, während die andere Seite der Elektroplaxfaser glatt ausgebildet ist. Die einzelnen Elektroplaxfasern sind hierbei seriell geordnet, also in Form einer Reihenschaltung angeordnet um hohe Spannungswerte zu erreichen.

Ein Elektroplax bzw. eine Elektroplaxfaser eines Elektroplax weist hierbei einen positiven und einen negativen Pol auf. Durch die Verwendung von Elektroplaxen ist somit eine Speicherung von elektrischer Energie ermöglicht, ohne dass nur wenig verfügbare und somit kostenintensive Metalle oder toxische Stoffe zur Verwendung kommen. Durch die elektrischen Pole sind die Elektroplaxe bzw. die Elektroplaxfasern untereinander elektrisch kontaktierbar.

Die Energiespeichereinrichtung weist mindestens einen Behälter auf, in dem Behälter ist ein elektrisch nichtleitendes Fluid aufgenommen, die Elektroplaxe und/oder die Elektroplaxfasern sind zumindest abschnittsweise in dem Behälter angeordnet und die Elektroplaxe und/oder die Elektroplaxfasern sind zumindest abschnittsweise, insbesondere vollständig, von dem Fluid umgeben. Die Energiespeichereinrichtung weist einen Behälter auf, in dem sich eine elektrisch nicht leitende Flüssigkeit befindet. In dieser Flüssigkeit sind die Elektroplaxe, vorzugsweise die in Serie und parallel geschalteten Elektroplaxe bzw. die Elektroplaxfasern angeordnet. Insbesondere weist die Flüssigkeit hierbei für organische Materialien konservierende Eigenschaften auf. Durch die Flüssigkeit ist insbesondere verhindert, dass die organischen Elektroplaxe durch einen Zersetzungsprozess unbrauchbar werden.

Das Fluid weist konservierende Eigenschaften auf. Insbesondere weist das Fluid konservierende Eigenschaften gegenüber dem organischen Material der Elektroplaxe auf. Hierdurch ist verhindert, dass das organische Material durch natürliche Zersetzungsprozesse funktionsuntüchtig wird.

Das Fluid besteht zumindest teilweise aus einem Alkohol, insbesondere aus Ethanol. Bei dem nicht elektrisch leitenden Fluid kann es sich insbesondere um Ethanol oder um ein Ethanol aufweisende Flüssigkeitsgemisch handeln. Ethanol ist nicht elektrisch leitfähig und weist konservierende Eigenschaften auf. Zudem ist Ethanol in einer Vielzahl von Reinheitsgraden erhältlich, sodass hier ein für die Anwendung passender Reinheitsgrad kommerziell verfügbar ist.

Die Elektroplaxe und/oder die Elektroplaxfasern sind künstlich hergestellt. Das Muskelgewebe der Elektroplaxe kann beispielsweise künstlich im Labormaßstab oder industriell hergestellt werden. Beispielsweise können die Elektroplaxe aus Zellkulturen gezüchtet werden. Beispielsweise können aber auch 3D-Druckverfahren oder ähnliche zum Einsatz kommen.

Der Behälter ist aus einem nicht elektrisch leitfähigen Material hergestellt. Um zu verhindern, dass die Reihenschaltungen und Parallelschaltungen der Elektroplaxe durch den Behälter kurzgeschlossen werden, ist dieser aus einem elektrisch nicht leitfähigen Material, insbesondere einem Kunststoff gefertigt.

Der Behälter weist mindestens zwei Kontaktbereiche an seiner Außenwandung auf, wobei jeder Kontaktbereich elektrisch leitend mit einem der elektrischen Pole mindestens eines Elektroplax und/oder einer Elektroplaxfaser verbunden ist. Das Gehäuse weist an seiner Außenwandung Kontaktbereiche, beispielsweise zur Kontaktierung eines Verbrauchers, auf. Die Kontaktbereiche stehen jeweils mit einem negativen oder einem positiven Pol eines oder mehrerer Elektroplaxfasern bzw. Elektroplaxe in Verbindung. Somit stellen die Kontaktbereiche den negativen und den positiven Pol der Energiespeichereinrichtung dar. Beispielsweise können die Kontaktbereiche an einander gegenüberliegenden Seiten der Außenwandung des Gehäuses angeordnet sein.

In einer konstruktiven Weiterbildung der Erfindung weist die Energiespeichereinrichtungen mindestens zwei in Reihe geschaltete Elektroplaxe oder Elektroplaxfasern auf. Viele elektrische Verbraucher benötigen zum Betrieb eine höhere elektrische Spannung als durch einen Elektroplax geliefert werden kann. Um eine erhöhte elektrische Spannung liefern zu können kann aus mehreren Elektroplaxen bzw. Elektroplaxfasern eine Reihenschaltung aufgebaut werden. Die Elektroplaxe werden durch die Verbindung eines positiven Pols eines Elektroplax bzw. einer Elektroplaxfaser mit dem negativen Pol eines weiteren Elektroplax bzw. einer Elektroplaxfaser in Reihe geschaltet. Je mehr Elektroplaxe in Reihe geschaltet werden, desto höher kann die zu erreichende elektrische Spannung sein.

In einer konstruktiven Weiterbildung der Erfindung weist die Energiespeichereinrichtungen mindestens zwei parallel geschaltete Elektroplaxe bzw. Elektroplaxfasern auf. Zur Erreichung höherer Stromstärken, können mehrere Elektroplaxe bzw. Elektroplaxfasern parallel geschaltet werden. Insbesondere können hierbei Reihenschaltungen aus mehreren Elektroplaxen parallel geschaltet werden, um höhere Stromspannungen und Stromstärken zu erreichen.

In einer Ausführungsform der Erfindung sind die Elektroplaxe und/oder die Elektroplaxfasern über Gewebefasern miteinander verbunden. Die Parallelschaltung von Elektroplaxen bzw. die Reihenschaltung von Elektroplaxen bzw. der Elektroplaxfasern kann über Gewebefasern der Elektroplaxe erfolgen. Insbesondere können sich die Fasern der Elektroplaxe hierbei selbstständig verbinden, sodass eine einfache Kontaktierung der einzelnen Elektroplaxe ermöglicht ist.

Bei einem Verfahren zur Herstellung einer Energiespeichereinrichtung mit mindestens einem Speicherelement, wobei es sich bei mindestens einem Speicherelement um mindestens einen Elektroplax und/oder um mindestens eine Elektroplaxfaser handelt, ist vorgesehen, dass Elektroplaxfasern und/oder Elektroplaxe in Reihe geschaltet werden. Zur Herstellung einer Energiespeichereinrichtung können Elektroplaxe und/oder Elektroplaxfasern aus einem elektrischen Fisch, beispielsweise aus einem Zitteraal oder einem Zitterrochen entnommen werden und miteinander verbunden werden. Insbesondere kann hierbei eine Reihenschaltung der Elektroplaxfasern und/oder der Elektroplaxe hergestellt werden. Weiterhin ist es möglich, dass die Elektroplaxfasern und/oder die Elektroplaxe künstlich, beispielsweise durch ein 3D-Druckverfahren hergestellt werden.

Bei dem Verfahren werden die Elektroplaxfasern mit einem 3D-Druckverfahren erzeugt. Die Elektroplaxfasern und/oder die Elektroplaxe können mittels 3D-Druckverfahren hergestellt werden. Die gedruckten Elektroplaxfasern können in Reihe und auch parallel verschaltet werden, um höhere Spannungen und Stromstärken zu erreichen. Die elektrische Energie wird hierbei in den Faserwandungen der Elektroplaxe gespeichert. Durch ein 3D-Druckverfahren ist ein besonders kostengünstiges Verfahren zur Herstellung einer Energiespeichereinrichtung gegeben.

Bei dem Verfahren werden die für das 3D-Druckverfahren benötigten Informationen, insbesondere Erbgutinformationen, durch eine Blutentnahme erhalten. Durch die Blutentnahme einer Blutprobe von einem elektrischen Fisch, beispielsweise von einem Zitteraal, können Erbinformationen von dem elektrischen Fisch erhalten werden. Aus den Erbgutinformationen können entsprechend Informationen für das 3D-Druckverfahren erhalten werden, um die Elektroplaxe bzw. die Elektroplaxfasern in einem 3D-Druckverfahren herstellen zu können.

Im Folgenden wird die Erfindung anhand eines in der Zeichnung dargestellten Ausführungsbeispiels weiter erläutert. Die schematischen Darstellungen zeigen:
- Figur 1:: eine Elektroplaxfaser mit positiven und negativen Pol;
- Figur 2:: eine Reihenschaltung von zwei Elektroplaxfasern; und
- Figur 3:: eine Reihenschaltung von Elektroplaxfasern in einem Behälter.

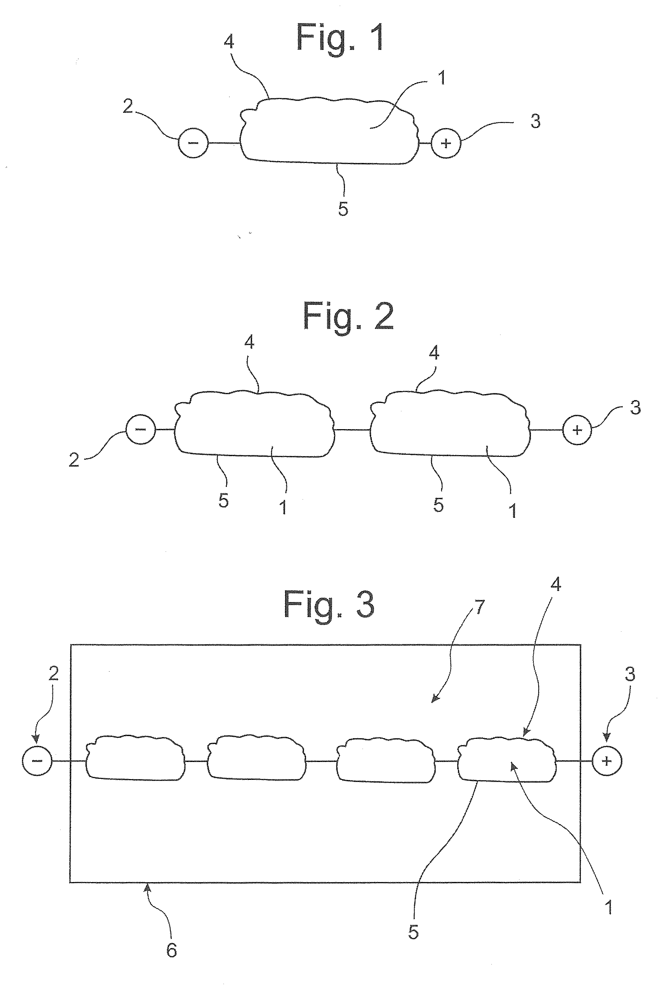

In Figur 1 ist eine Elektroplaxfaser 1 mit einem negativen Pol 2 und einem positiven Pol 3 dargestellt. Eine Seite 4 der Elektroplaxfaser ist hierbei warzenförmig, also papillös, ausgebildet, während die gegenüberliegende Seite 5 glatt ausgebildet ist.

In Figur 2 ist eine Reihenschaltung von zwei Elektroplaxfasern 1 gemäß Figur 1 dargestellt. Durch die Reihenschaltung von zwei Elektroplaxfasern kann eine Erhöhung der zu liefernden elektrischen Spannung erreicht werden.

In Figur 3 ist eine Reihenschaltung von Elektroplaxfasern gemäß Figur 1 in einem Behälter 6 dargestellt. Der Behälter 6 ist mit einer nicht leitenden Flüssigkeit 7, insbesondere mit Ethanol, gefüllt. Die Elektroplaxe 1 sind in der Flüssigkeit 7 angeordnet, wobei die Elektroplaxe 1 durch die Flüssigkeit konserviert werden.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Energiespeichereinrichtung zur Speicherung von elektrischer Energie mit mindestens einem Speicherelement, wobei es sich bei mindestens einem Speicherelement um mindestens ein Elektroplax (1) oder um mindestens eine Elektroplaxfaser handelt,
**dadurch gekennzeichnet,**
**dass** die Energiespeichereinrichtung mindestens einen Behälter (6) aufweist, dass in dem Behälter (6) ein elektrisch nichtleitendes Fluid (7) aufgenommen ist,
**dass** die Elektroplaxe (1) und/oder die Elektroplaxfasern zumindest abschnittsweise in dem Behälter (6) angeordnet sind,
**dass** die Elektroplaxe (1) und/oder die Elektroplaxfasern zumindest abschnittsweise, insbesondere vollständig, von dem Fluid (7) umgeben sind,
**dass** das Fluid (7) konservierende Eigenschaften aufweist,
**dass** das Fluid (7) zumindest teilweise aus einem Alkohol, insbesondere aus Ethanol, besteht,
**dass** die Elektroplaxe (1) oder die Elektroplaxfasern künstlich durch Züchtung aus Zellkulturen hergestellt sind,
**dass** der Behälter (6) aus einem nicht elektrisch leitfähigem Material hergestellt ist, und
**dass** der Behälter (6) mindestens zwei Kontaktbereiche an seiner Außenwandung aufweist, wobei jeder Kontaktbereich elektrisch leitend mit einem der elektrischen Pole mindestens eines Elektroplax (1) und/oder einer Elektroplaxfaser verbunden ist.

2. Energiespeichereinrichtung nach Anspruch 1, **dadurch gekennzeichnet, dass** die Energiespeichereinrichtung mindestens zwei in Reihe geschaltete Elektroplaxe (1) oder Elektroplaxfasern aufweist.

3. Energiespeichereinrichtung nach Anspruch 1, **dadurch gekennzeichnet, dass** die Energiespeichereinrichtung mindestens zwei parallel geschaltete Elektroplaxe (1) oder mindestens zwei parallel geschaltete Elektroplaxfasern aufweist.

4. Energiespeichereinrichtung nach einem der Ansprüche 1 bis 3, **dadurch gekennzeichnet, dass** die Elektroplaxe (1) oder die Elektroplaxfasern über Gewebefasern miteinander verbunden sind.

## Claims

1. Energy storage device for storage of electrical energy comprising at least one storage element, wherein at least one storage element comprises at least one electroplax (1) or at least one electroplax fibre,
**characterized in that** the energy storage device has at least one container (6),
that an electrically non-conducting fluid (7) is accommodated in the container (6),
that the electroplax (1) and/or the electroplax fibres are arranged in the container (6) at least in sections, that the electroplax (1) and/or the electroplax fibres are surrounded by a fluid (7) at least in sections, in particular completely,
that the fluid (7) has preserving properties,
that the fluid (7) consists at least partially of an alcohol, in particular of ethanol,
that the electroplax (1) or the electroplax fibres are produced artificially by cultivation from cell cultures,
that the container (6) is manufactured from a non-electrically conductive material and
that the container (6) has at least two contact regions on its outer wall wherein each contact region is connected in an electrically conductive manner to one of the electric poles of at least one electroplax (1) and/or an electroplax fibre.

2. Energy storage device according to Claim 1, **characterized in that** the energy storage device comprises at least two electroplax (1) and/or electroplax fibres connected in series.

3. Energy storage device according to Claim 1, **characterized in that** the energy storage device comprises at least two electroplax (1) connected in parallel or at least two electroplax fibres connected in parallel.

4. Energy storage device according to one of Claims 1 to 3, **characterized in that** the electroplax (1) or the electroplax fibres are connected to one another via tissue fibres.

## Revendications

1. Dispositif accumulateur d'énergie, destiné à accumuler de l'énergie électrique, pourvu d'au moins un élément accumulateur, l'au moins un élément accumulateur étant au moins un organe électrique (1) ou au moins une fibre d'organe électrique,
**caractérisé**
**en ce que** le dispositif accumulateur d'énergie comporte au moins un réservoir (6),
**en ce que** dans le réservoir (6) est réceptionné un fluide (7) non conducteur électrique,
**en ce que** les organes électriques (1) et / ou les fibres d'organes électriques sont placé(e)s au moins par endroits dans le réservoir (6),
**en ce que** les organes électriques (1) et / ou les fibres d'organes électriques sont entouré(e)s au moins par endroits, notamment totalement par le fluide (7),
**en ce que** le fluide (7) fait preuve de propriétés conservatrices,
**en ce que** le fluide (7) consiste au moins en partie dans un alcool, notamment dans de l'éthanol,
**en ce que** les organes électriques (1) ou les fibres d'organes électriques sont fabriqué(e)s artificiellement, par culture de cellules,
**en ce que** le réservoir (6) est fabriqué dans une matière non susceptible de conduire l'électricité et
**en ce que** le réservoir (6) comporte sur sa paroi extérieure au moins deux zones de contact, chaque zone de contact étant connectée de manière à conduire l'électricité avec l'un des pôles électriques d'au moins un organe électrique (1) et / ou une fibre d'organe électrique.

2. Dispositif accumulateur d'énergie selon la revendication 1, **caractérisé en ce que** le dispositif accumulateur d'énergie comporte au moins deux organes électriques (1) ou fibres d'organes électriques monté(e)s en série.

3. Dispositif accumulateur d'énergie selon la revendication 1, **caractérisé en ce que** le dispositif accumulateur d'énergie comporte au moins deux organes électriques (1) ou fibres d'organes électriques monté(e)s en parallèle.

4. Dispositif accumulateur d'énergie selon l'une quelconque des revendications 1 à 3, **caractérisé en ce que** les organes électriques (1) ou les fibres d'organes électriques sont connectés les un(e)s aux autres par l'intermédiaire de fibres de tissu.
